# FASCICULE DE BREVET EUROPEEN

(11) **EP 3 152 239 B1**
(45) Date de publication et mention de la délivrance du brevet: **26.09.2018**
(21) Numéro de dépôt: 15725598.5
(22) Date de dépôt: 27.05.2015
(51) Int. Cl.: B60C 1/00, C08C 19/44, C08K 3/36, C08L 19/00, C08L 15/00

(54) **PNEUMATIQUE À FAIBLE RÉSISTANCE AU ROULEMENT**
REIFEN MIT GERINGEM ROLLWIDERSTAND
TYRE WITH LOW ROLLING RESISTANCE

(30) Priorité: 05.06.2014 FR 1455097
(43) Date de publication de la demande: 12.04.2017
(73) Titulaire: Compagnie Générale des Etablissements Michelin, 63000 Clermont-Ferrand (FR)
(72) Inventeur: LABRUNIE, Philippe, 63040 Clermont-Ferrand Cedex 9 (FR); DE GAUDEMARIS, Benoît, 63000 Clermont-Ferrand Cedex 9 (FR)
(74) Mandataire: Wroblewski, Nicolas Paul André
(86) Numéro de dépôt international: PCT/EP2015/061627
(87) Numéro de publication internationale: WO 2015/185395

(56) Documents cités:
- WO-A1-2009/077837
- WO-A1-2012/012133
- WO-A1-2012/069565
- WO-A1-2012/069567
- FR-A1- 2 951 178

## Description

Le domaine de l'invention est celui des pneumatiques à faible résistance au roulement.

Une pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi comme bande de roulement de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

Des bandes de roulement pour pneumatique à faible résistance au roulement peuvent être obtenues par l'utilisation conjointe de silice et d'élastomères fonctionnels dont la fonction est interactive avec la silice. A titre d'exemple, on peut citer les brevets ou demandes de brevet EP 0 778 311 B1, EP 0877 047 B1, WO 2008/141702, WO 2006/050486. Pour améliorer encore davantage la performance de faible résistance au roulement de pneumatique, il est possible de diminuer le taux de charge renforçante, notamment de silice, dans la composition de caoutchouc de la bande de roulement. Mais cette solution a généralement pour inconvénient de diminuer la performance d'adhérence du pneumatique.

Par ailleurs il est connu que la performance d'adhérence d'un pneumatique peut être améliorée en augmentant la surface de contact de la bande de roulement sur le sol de roulage, notamment en utilisant comme bande de roulement un matériau déformable, en l'espèce une composition de caoutchouc déformable. Une façon de rendre une composition de caoutchouc plus déformable est de la rendre davantage molle par l'introduction de forte quantité de plastifiant. Néanmoins, cette solution peut se heurter au problème d'exsudation de plastifiant lorsque les quantités de plastifiant sont relativement importantes.

Les Demanderesses ont trouvé une solution à ce problème en associant de façon spécifique dans une composition de caoutchouc renforcée par une silice pour bande de roulement une certaine matrice élastomère, un taux de charge renforçante déterminé et un système plastifiant particulier.

Ainsi l'invention a pour objet une bande de roulement de pneumatique qui comporte une composition de caoutchouc à base d'au moins :
- une matrice élastomère comprenant plus de 50% en masse d'un SBR solution qui porte une fonction silanol en extrémité de chaîne,
- une charge renforçante présente à un taux compris entre 40 et 80 pce, laquelle charge renforçante comprend entre 40 et 80 pce d'une silice,
- un agent de couplage pour coupler la silice au SBR solution,
- 10 à 50 pce d'une résine hydrocarbonée présentant une Tg supérieure à 20°C,
- 0 à moins de 5 pce d'un plastifiant liquide.

L'invention a aussi pour objet un procédé pour le pneumatique conforme à l'invention.

Les pneumatiques de l'invention sont particulièrement destinés à équiper des véhicules à moteur de type tourisme, ainsi que des véhicules deux roues.

L'invention ainsi que ses avantages seront aisément compris à la lumière de la description et des exemples de réalisation qui suivent.

### I- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties de la matrice élastomère qui consiste en la totalité des élastomères présents dans la composition de caoutchouc. Toutes les valeurs de température de transition vitreuse « Tg » sont mesurées de manière connue par DSC (Differential Scanning Calorimetry) selon la norme ASTM D3418 (1999).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### 1-1. Matrice élastomère :

Le SBR solution est un copolymère de styrène et de butadiène préparé en solution. Il a pour caractéristique essentielle de porter une fonction silanol en extrémité de chaîne.

Un tel élastomère peut être préparé selon le mode opératoire décrit dans le brevet EP 0 778 311 B1, par exemple par réaction du carbanion en extrémité de la chaîne élastomère vivante avec l'hexaméthylcyclotrisiloxane, suivie d'une réaction avec un donneur de proton.

Il est entendu que le SBR solution peut être constitué par un mélange de SBR solution, les SBR solution se différenciant des uns des autres par leur microstructure ou leur macrostructure.

Selon l'un quelconque des modes de réalisation de l'invention, le SBR solution présente de préférence une température de transition vitreuse inférieur à -40°C, de manière plus préférentielle entre -70°C et -40°C.

Lorsque la matrice élastomère de la composition de la bande de roulement conforme à l'invention comporte un deuxième élastomère, ce deuxième élastomère est de préférence un élastomère diénique.

Par élastomère (ou indistinctement "caoutchouc", les deux termes étant considérés comme synonymes) du type "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle s'applique à tout type d'élastomère diénique, l'homme du métier du pneumatique comprendra que l'invention est de préférence mise en oeuvre avec des élastomères diéniques essentiellement insaturés.

Ces définitions étant données, on entend notamment par élastomère diénique susceptible d'être mis en oeuvre dans les compositions conformes à l'invention :
(a) - tout homopolymère obtenu par polymérisation d'un monomère diène conjugué, ayant de préférence de 4 à 12 atomes de carbone ;
(b) - tout copolymère obtenu par copolymérisation d'un ou plusieurs diènes conjugués entre eux ou avec un ou plusieurs composés vinyle aromatique ayant de préférence de 8 à 20 atomes de carbone.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Le deuxième élastomère, lorsqu'il est diénique, est différent du SBR solution en ce qu'il ne porte pas de fonction silanol en extrémité de chaîne. Néanmoins il peut avoir une microstructure ou une macrostructure qui peuvent être identiques à ou différentes de celles du SBR solution.

Le deuxième élastomère, qu'il soit diénique ou non, est utilisé dans une proportion comprise entre 0 et 50%, préférentiellement entre 0 et 25%, plus préférentiellement entre 0 et 10% de la masse de la matrice élastomère. Autrement dit la matrice élastomère comprend plus de 50%, préférentiellement plus de 75% solution, encore plus préférentiellement plus de 90% en masse du SBR solution, le complément à 100% étant constitué par le deuxième élastomère. Ces plages préférentielles s'appliquent à l'un quelconque des modes de réalisation de l'invention.

Le deuxième élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

### 1-2. Charge renforçante

La composition de caoutchouc comporte tout type de charge dite renforçante, connue pour ses capacités à renforcer une composition de caoutchouc utilisable pour la fabrication d'une bande de roulement pour pneumatiques. Le taux de charge renforçante est supérieur à 40 pce et inférieur ou égal à 80 pce.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante a pour caractéristique essentielle de comprendre entre 40 et 80 pce d'une silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

L'homme du métier comprendra qu'à titre de charge équivalente de silice décrite dans le présent paragraphe, pourrait être utilisée une charge renforçante d'une autre nature, notamment organique telle que du noir de carbone, dès lors que cette charge renforçante serait recouverte d'une silice. A titre d'exemple, on peut citer par exemple des noirs de carbone pour pneumatiques tels que décrits par exemple dans les documents brevet WO 96/37547, WO 99/28380.

Selon un mode de réalisation particulier de l'invention, le taux de silice est compris dans un domaine allant de 50 à 70 pce. Selon ce mode de réalisation particulier de l'invention, le taux de charge renforçante varie préférentiellement entre 50 et 75 pce, plus préférentiellement entre 55 et 70 pce.

Selon un mode de réalisation de l'invention, la composition de caoutchouc, peut comporter du noir de carbone. Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Le noir de carbone, lorsqu'il est présent, est utilisé de préférence à un taux inférieur à 10 pce, de manière plus préférentielle inférieur ou égal à 5 pce. Ces plages préférentielles s'appliquent à l'un quelconque des modes de réalisation de l'invention. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

On utilise de manière bien connue un agent de couplage, généralement un silane, (ou agent de liaison) destiné à assurer une connexion suffisante, de nature chimique et/ou physique, entre la silice (surface de ses particules) et un des élastomères de la matrice élastomère, notamment le SBR solution. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z - A - Sₓ - A - Z , dans laquelle:
   - x est un entier de 2 à 8 (de préférence de 2 à 5) ;
   - les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
   - les symboles Z, identiques ou différents, répondent à l'une des trois formules ci-après: 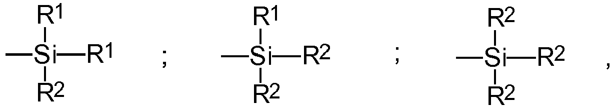 dans lesquelles:
      - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
      - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemples d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

La teneur en agent de couplage est avantageusement inférieure à 10 pce, étant entendu qu'il est en général souhaitable d'en utiliser le moins possible. Son taux est préférentiellement compris entre 0,5 et 8 pce, plus préférentiellement entre 2 et 8 pce. Ce taux est aisément ajusté par l'homme du métier selon le taux de silice utilisé dans la composition.

### .I-3. Résine hydrocarbonée :

La résine hydrocarbonée, présente dans la composition de caoutchouc selon un taux allant de 10 à 50 pce, présente une température de transition vitreuse, Tg, supérieure à 20°C.

La dénomination "résine" est réservée dans la présente demande, par définition connue de l'homme du métier, à un composé qui est solide à température ambiante (23°C), par opposition à un plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme plastifiants ou tackifiants dans des matrices polymériques. Elles sont par nature miscibles (i.e., compatibles) aux taux utilisés avec les compositions de polymères auxquelles elles sont destinées, de manière à agir comme de véritables diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "*softening point"*)*.* La température de ramollissement d'une résine hydrocarbonée est généralement supérieure d'environ 50 à 60°C à sa valeur de Tg. Le point de ramollissement est mesuré selon la norme ISO 4625 (méthode « Ring and Bail »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes :
- solvant d'élution : le tétrahydrofurane,
- température 35°C ;
- concentration 1 g/litre ;
- débit : 1 ml/min ;
- volume injecté : 100 µl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène ou les mélanges de ces résines. Parmi les résines de copolymères ci-dessus, on peut citer plus particulièrement les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C5/coupe C9, ou les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, ou les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Selon l'un quelconque des modes de réalisation de l'invention, la résine est préférentiellement une résine terpénique telle qu'un homopolymère ou un copolymère de limonène, ou bien un copolymère de coupe C5/ coupe C9.

La résine est utilisée à un taux allant de 10 à 50 pce dans la composition de caoutchouc. Selon le mode de réalisation particulier où le taux de silice dans la composition de caoutchouc va de 50 à 70 pce, le taux de résine est de préférence compris dans un domaine allant de 20 à 40 pce.

### .I-4. Plastifiant liquide :

Le plastifiant liquide présente préférentiellement une température de transition vitreuse inférieure à -20°C, plus préférentiellement inférieure à -40°C.

A titre de plastifiant liquide, toute huile d'extension, qu'elle soit de nature aromatique ou non-aromatique, tout plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement comme plastifiants liquides les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés.

### 1-5. Additifs divers :

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement de pneumatiques, notamment pneumatiques, des charges autres que celles précitées, par exemple des charges non renforçantes comme la craie ou bien des charges lamellaires comme le kaolin, le talc, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

### I-6. Préparation des compositions de caoutchouc :

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) la matrice élastomère, la charge renforçante, l'agent de couplage, la résine hydrocarbonée, le cas échéant le plastifiant liquide, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (la matrice élastomère, la résine hydrocarbonée, le cas échéant le plastifiant liquide, la charge renforçante et l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Quel que soit le mode de réalisation de l'invention, le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée ou extrudée par exemple pour former un profilé de caoutchouc utilisé pour la fabrication d'une bande de roulement de pneumatique, notamment pour véhicule tourisme.

L'invention concerne les bandes de roulement précédemment décrits tant à l'état cru (c'est à dire, avant cuisson) qu'à l'état cuit (c'est à dire, après réticulation ou vulcanisation).

L'invention concerne aussi un procédé pour préparer la bande de roulement conforme à l'invention, lequel procédé comprend les étapes suivantes :
- malaxer thermomécaniquement la matrice élastomère, la charge renforçante, l'agent de couplage, la résine hydrocarbonée, jusqu'à atteindre une température maximale comprise entre 110°C et 190°C ;
- refroidir l'ensemble à une température inférieure à 100°C ;
- incorporer ensuite, au cours d'une seconde étape, un système de réticulation ;
- malaxer le tout jusqu'à une température maximale inférieure à 110°C ;
- calandrer ou extrudrer la composition ainsi obtenue.

L'invention s'applique également aux cas où les compositions de caoutchouc précédemment décrites forment une partie seulement de bandes de roulement du type composites ou hybrides, notamment celles constituées de deux couches radialement superposées de formulations différentes (structure dite *"cap-base"*), toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

Les caractéristiques précitées de la présente invention, ainsi que d'autres, seront mieux comprises à la lecture de la description suivante d'exemple de réalisation de l'invention, donné à titre illustratif et non limitatif.

### II- EXEMPLES DE REALISATION DE L'INVENTION

### II.1 - Préparation des compositions A, B, C et D :

Les formulations (en pce) des compositions A, B, C et D sont décrites dans le tableau I.
Les matrices élastomères des compositions B et D sont identiques et comprennent plus de 50% en masse d'un SBR solution qui porte une fonction silanol en extrémité de chaîne. Les matrices élastomères des compositions A et C sont identiques et comprennent plus de 50% en masse d'un SBR solution dépourvue de fonction silanol.

Les compositions C et D diffèrent entre elles uniquement par la nature de l'élastomère qui constitue la matrice élastomère. La composition D est conforme à l'invention tandis que la composition C ne l'est pas en raison de la nature de la matrice élastomère.

Les compositions A et B diffèrent entre elles uniquement par la nature de l'élastomère qui constitue la matrice élastomère et sont toutes les deux non conformes à l'invention, en raison du taux de charge renforçante, du taux de silice, du taux de résine et du taux de plastifiant liquide.

On procède pour la fabrication de ces compositions de la manière suivante : on introduit dans un mélangeur interne (taux de remplissage final : environ 70% en volume), dont la température initiale de cuve est d'environ 60°C, successivement la matrice élastomère, la charge renforçante, l'agent de couplage, la résine hydrocarbonée, le cas échéant le plastifiant liquide ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions A, B, C et D ainsi obtenues sont vulcanisées, et leurs propriétés à l'état cuit sont présentées dans le tableau I.

### II.2 - Résultats :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz.
Pour la mesure de tan delta max à 23°C, on effectue à 23°C un balayage en amplitude de déformation de 0 à 50% (cycle aller), puis de 50% à 0% (cycle retour). Pour le cycle retour, on mesure la valeur maximale de tan(δ) observée, tan(δ)ₘₐₓ. Plus la valeur de tan(δ)ₘₐₓ à 23°C est faible, plus la résistance au roulement est faible, ce qui indique une bonne performance de résistance au roulement du pneumatique.
Pour la mesure du module complexe de cisaillement G*, on effectue un balayage en température sous une contrainte fixe de 0.7 MPa.

Les essais de traction sont effectués conformément à la norme française NF T 46-002 de septembre 1988. On mesure en seconde élongation (c'est-à-dire après accommodation) le module sécant nominal calculé en se ramenant à la section initiale de l'éprouvette (ou contrainte apparente, en MPa, à 100% d'allongement noté MSA 100.
Toutes ces mesures de traction sont effectuées dans les conditions normales de température (23±2°C) et d'hygrométrie (50±5% d'humidité relative), selon la norme française NF T 40-101 (décembre 1979).

Toutes les valeurs sont indiquées en base 100 par rapport à un témoin donné. Une valeur supérieure à 100 indique une valeur supérieure à celle du témoin. La composition D conforme à l'invention a pour témoin la composition C non conforme. La composition B non conforme à l'invention a pour témoin la composition A non conforme.

Les valeurs de tan delta max à 23°C des compositions B et D comportant le SBR solution portant une fonction silanol en extrémité de chaîne sont beaucoup plus faibles que les compositions A et C respectivement, comme cela est attendu.

De façon inattendue, on observe que la valeur de MSA 100 est plus faible de 16% pour la composition D que pour la composition C, ce qui signifie que la composition de caoutchouc D est plus molle, donc plus déformable que la composition C, ce qui est plus favorable pour la performance d'adhérence du pneumatique par un meilleur contact sur le sol de roulage, lorsqu'une telle composition est utilisée en bande de roulement de pneumatique. Ce résultat est obtenu sans diminution de la valeur de G*, ce qui augure un maintien du comportement routier du pneumatique. L'amélioration de ce compromis entre les propriétés d'hystérèse et de déformation de la composition de caoutchouc n'est pas observé dans le cas de la composition A comparativement à la composition B. Un pneumatique dont la bande de roulement est constituée de la composition D présente un compromis de performance amélioré entre la résistance au roulement et l'adhérence.

**Tableau I**

| **Compositions** | A (témoin) | B (témoin) | C (témoin) | D (invention) |
|---|---|---|---|---|
| SBR1 (1) | 100 | - | 100 | - |
| SBR2 (2) | - | 100 | - | 100 |
| noir de carbone (3) | 3 | 3 | 3 | 3 |
| silice (4) | 80 | 80 | 60 | 60 |
| résine (5) | 36 | 36 | 30 | 30 |
| plastifiant liquide (6) | 7 | 7 | - | - |
| cire antiozone | 1.8 | 1.8 | 1.8 | 1.8 |
| antioxydant (7) | 2.7 | 2.7 | 2.7 | 2.7 |
| silane (8) | 6.4 | 6.4 | 4.8 | 4.8 |
| Acide stéarique | 2 | 2 | 2 | 2 |
| CBS (9) | 2.3 | 2.3 | 2.3 | 2.3 |
| DPG (10) | 2 | 2 | 2 | 2 |
| soufre | 1 | 1 | 1 | 1 |
| ZnO | 1 | 1 | 1 | 1 |

| **Propriétés à cuit** | | | | |
|---|---|---|---|---|
| Tan delta max 23°C | 100 | 78 | 100 | 72 |
| MSA 100 23°C | 100 | 108 | 100 | 84 |
| G* 60°C, 0.7 MPa | 100 | 109 | 100 | 100 |

| | | | | |
|---|---|---|---|---|
| (1) SBR1 : SBR avec 27% de motif styrène et 24% de motif 1,2 de la partie butadiénique (Tg = -48°C) ; (2) SBR avec 27% de motif styrène et 24% de motif 1,2 de la partie butadiénique (Tg = -48°C) porteur d'une fonction silanol en extrémité de la chaîne élastomère ; (3) Grade ASTM N234 (société Cabot) ; (4) Silice « Zeosil 1165 MP » de la société Rhodia type « HDS » (5) Résine coupe C5/coupe C9 ECR-373 de la société Exxon ; (6) Huile de tournesol à 85 % en poids d'acide oléique, « Lubrirob Tod 1880 » de la société Novance (7) N-(1,3-diméthylbutyl)-N'-phényl-p-phénylènediamine, de la société Flexsys (8) TESPT (« Si69 » de la société Degussa) ; (9) N-cylohexyl-2-benzothiazol-sulfénamide (« Santocure CBS » de la société Flexsys) (10) Diphénylguanidine (« Perkacit » DPG de la société Flexsys). | | | | |

## Revendications

1. Pneumatique dont la bande de roulement comporte une composition de caoutchouc à base d'au moins :
- une matrice élastomère comprenant plus de 50% en masse d'un SBR solution qui porte une fonction silanol en extrémité de chaîne,
- une charge renforçante présente à un taux compris entre 40 et 80 pce, laquelle charge renforçante comprend entre 40 et 80 pce d'une silice,
- un agent de couplage pour coupler la silice au SBR solution,
- 10 à 50 pce d'une résine hydrocarbonée présentant une Tg supérieure à 20°C,
- 0 à moins de 5 pce d'un plastifiant liquide.

2. Pneumatique selon la revendication 1 dans lequel le SBR solution présente une température de transition vitreuse inférieure à -40°C.

3. Pneumatique selon la revendication 2 dans lequel le SBR solution présente une température de transition vitreuse comprise entre -70°C et -40°C.

4. Pneumatique selon l'une quelconque des revendications 1 à 3, dans lequel la matrice élastomère comprend plus de 75%, préférentiellement plus de 85% en masse du SBR solution.

5. Pneumatique selon l'une quelconque des revendications 1 à 4, dans lequel la résine est une résine terpénique ou un copolymère de coupe C5 / coupe C9.

6. Pneumatique selon l'une quelconque des revendications 1 à 5 dans lequel le taux de silice va de 50 à 70 pce.

7. Pneumatique selon la revendication 6 dans lequel le taux de résine varie de 20 à 40 pce.

8. Pneumatique selon l'une quelconque des revendications 6 à 7 dans lequel le taux de charge renforçante varie entre 50 pce et 75 pce.

9. Pneumatique selon l'une quelconque des revendications 1 à 8 dans lequel la charge renforçante comprend un noir de carbone à un taux inférieur à 10 pce, préférentiellement d'au plus 5 pce.

10. Procédé pour préparer un pneumatique selon l'une quelconque des revendications 1 à 9 qui comprend les étapes suivantes :
- malaxer thermomécaniquement la matrice élastomère la charge renforçante, l'agent de couplage, la résine, jusqu'à atteindre une température maximale comprise entre 110°C et 190°C ;
- refroidir l'ensemble à une température inférieure à 100°C ;
- incorporer ensuite, au cours d'une seconde étape, un système de réticulation ;
- malaxer le tout jusqu'à une température maximale inférieure à 110°C ;
- calandrer ou extrudrer la composition ainsi obtenue.

## Patentansprüche

1. Reifen, dessen Lauffläche eine Kautschukzusammensetzung auf Basis von mindestens:
- einer Elastomermatrix, die mehr als 50 Gew.-% einer Lösungs-SBR mit einer Silanolfunktion am Kettenende umfasst,
- einen verstärkenden Füllstoff, der in einem Gehalt zwischen 40 und 80 phe vorliegt, wobei der verstärkende Füllstoff zwischen 40 und 80 phe eines Siliciumdioxids umfasst,
- einem Kupplungsmittel zum Kuppeln des Siliciumdioxids mit dem Lösungs-SBR,
- 10 bis 50 phe eines Kohlenwasserstoffharzes mit einer Tg von mehr als 20 °C,
- 0 bis mindestens 5 phe eines flüssigen Weichmachers
umfasst.

2. Reifen nach Anspruch 1, wobei das Lösungs-SBR eine Glasübergangstemperatur von weniger als -40 °C aufweist.

3. Reifen nach Anspruch 2, wobei das Lösungs-SBR eine Glasübergangstemperatur zwischen -70 °C und -40 °C aufweist.

4. Reifen nach einem der Ansprüche 1 bis 3, wobei die Elastomermatrix mehr als 75 Gew.-% und vorzugsweise mehr als 85 Gew.-% Lösungs-SBR umfasst.

5. Reifen nach einem der Ansprüche 1 bis 4, wobei es sich bei dem Harz um ein Terpenharz oder ein C5-Schnitt/C9-Schnitt-Copolymer handelt.

6. Reifen nach einem der Ansprüche 1 bis 5, wobei der Gehalt an Siliciumdioxid im Bereich von 50 bis 70 phe liegt.

7. Reifen nach Anspruch 6, wobei der Gehalt an Harz im Bereich von 20 bis 40 phe liegt.

8. Reifen nach einem der Ansprüche 6 bis 7, wobei der Gehalt an verstärkendem Füllstoff zwischen 50 phe und 75 phe liegt.

9. Reifen nach einem der Ansprüche 1 bis 8, wobei der verstärkende Füllstoff einen Ruß in einem Gehalt von weniger als 10 phe und vorzugsweise höchstens 5 phe umfasst.

10. Verfahren zur Herstellung eines Reifens nach einem der Ansprüche 1 bis 9, bei dem man:
- die Elastomermatrix, den verstärkenden Füllstoff, das Kupplungsmittel und das Harz knetet, bis eine Höchsttemperatur zwischen 110 °C und 190 °C erreicht ist,
- das Ganze auf eine Temperatur von weniger als 100 °C abkühlt;
- dann im Lauf eines zweiten Schritts ein Vernetzungssystem eingearbeitet;
- das Ganze bis zu einer Höchsttemperatur von weniger als 110 °C knetet;
- die so erhaltene Zusammensetzung kalandriert oder extrudiert.

## Claims

1. Tyre, the tread of which comprises a rubber composition based on at least:
- an elastomer matrix comprising more than 50% by weight of a solution SBR bearing a silanol function at the chain end,
- a reinforcing filler present at a content of between 40 and 80 phr, which reinforcing filler comprises between 40 and 80 phr of a silica,
- a coupling agent for coupling the silica to the solution SBR,
- 10 to 50 phr of a hydrocarbon-based resin having a Tg of greater than 20°C,
- 0 to less than 5 phr of a liquid plasticizer.

2. Tyre according to Claim 1, wherein the solution SBR has a glass transition temperature of less than -40°C.

3. Tyre according to Claim 2, wherein the solution SBR has a glass transition temperature of between -70°C and -40°C.

4. Tyre according to any one of Claims 1 to 3, wherein the elastomer matrix comprises more than 75%, preferentially more than 85% by weight of solution SBR.

5. Tyre according to any one of Claims 1 to 4, wherein the hydrocarbon-based resin is a terpene resin or a C5 fraction/ C9 fraction copolymer.

6. Tyre according to any one of Claims 1 to 5, wherein the content of silica ranges from 50 to 70 phr.

7. Tyre according to Claim 6, wherein the content of hydrocarbon-based resin ranges from 20 to 40 phr.

8. Tyre according to either of Claims 6 and 7, wherein the content of reinforcing filler varies between 50 phr and 75 phr.

9. Tyre according to any one of Claims 1 to 8, wherein the reinforcing filler comprises a carbon black at a content of less than 10 phr, preferentially of at most 5 phr.

10. Process for preparing a tyre according to any one of Claims 1 to 9, which comprises the following steps:
- thermomechanically kneading the elastomer matrix, the reinforcing filler, the coupling agent and the hydrocarbon-based resin until a maximum temperature of between 110°C and 190°C is reached;
- cooling the combined mixture to a temperature of less than 100°C;
- subsequently incorporating, during a second step, a crosslinking system;
- kneading everything up to a maximum temperature of less than 110°C ;
- calendering or extruding the composition thus obtained.
